# EUROPÄISCHE PATENTSCHRIFT

(11) **EP 3 063 034 B1**
(45) Veröffentlichungstag und Bekanntmachung des Hinweises auf die Patenterteilung: **16.05.2018**
(21) Anmeldenummer: 14761292.3
(22) Anmeldetag: 18.08.2014
(51) Int. Cl.: B60K 35/00, G06F 3/0489, B60K 37/06

(54) **BILDVERARBEITUNGSVORRICHTUNG, VERFAHREN ZUR BESTIMMUNG VON BILDINFORMATION UND COMPUTERPROGRAMM ZUR DURCHFÜHRUNG DES VERFAHRENS**
IMAGE PROCESSING DEVICE, METHOD FOR DETERMINING OF IMAGE INFORMATION AND COMPUTER PROGRAM FOR EXECUTING THE METHOD
DISPOSITIF DE TRAITEMENT D'IMAGES, PROCÉDÉ POUR DÉTERMINER DES INFORMATIONS D'IMAGES ET LOGICIEL POUR EXÉCUTER LE PROCÉDÉ

(30) Priorität: 31.10.2013 DE 102013222181
(43) Veröffentlichungstag der Anmeldung: 07.09.2016
(73) Patentinhaber: VOLKSWAGEN AKTIENGESELLSCHAFT, 38440 Wolfsburg (DE)
(72) Erfinder: BUDZYNSKI, Tobias, 13503 Berlin (DE); KUHN, Mathias, 14129 Berlin (DE); LOU, Jian, 10707 Berlin (DE); BACHORSKI, Tomasz, 38176 Wendeburg (DE); HOFMANN, Gustav, 38116 Braunschweig (DE)
(86) Internationale Anmeldenummer: PCT/EP2014/067527
(87) Internationale Veröffentlichungsnummer: WO 2015/062762

(56) Entgegenhaltungen:
- DE-A1-102006 037 156
- DE-A1-102007 024 150
- DE-A1-102008 023 505
- DE-A1-102008 045 128
- DE-A1-102010 052 609
- DE-A1-102011 121 758
- DE-A1-102012 206 030
- DE-C1- 3 514 438
- US-A1- 2011 246 934

## Beschreibung

Die vorliegende Erfindung betrifft eine Bildverarbeitungsvorrichtung zur Bestimmung von Bildinformation zur Darstellung in einem Fahrzeug nach Anspruch 1, ein Verfahren zur Bestimmung von Bildinformation zur Darstellung in einem Fahrzeug nach Anspruch 12 und ein Computerprogramm zur Durchführung des Verfahrens nach Anspruch 13.

### Beschreibung

Aus dem Stand der Technik sind mehrere Varianten der Informationsdarstellung in Kraftfahrzeugen (Kfz), wie beispielsweise Autos, Lastkraftwagen, Zügen, etc. bekannt. Dabei werden beispielsweise analoge Instrumente verwendet, die in zumeist verschiedenen Farben ausgeführt und beleuchtet sind. Darüber hinaus sind Anzeigebildschirme bekannt, die zumeist in einer Mittelkonsole eines Kfz oder zumindest in der Nähe eines Fahrers oder Führers des Kfz angeordnet sind, aber auch im Cockpit vor dem Fahrer vorkommen, und die ebenfalls Information darstellen. Als Beispiele können hier Navigationssysteme, Bordcomputer, Radiodisplays, usw. dienen. Ferner sind sogenannte Head-Up-Displays (von engl. "head-up": Kopf oben lassen) bekannt, die Informationen beispielsweise über die Geschwindigkeit, bevorstehende Routenänderungen, usw. in einen Bereich des Sichtfeldes eines Nutzers eines solchen Kfz projizieren, wobei dieser seinen Blick dann idealerweise nicht von einer befahrenen Strecke abwenden muss, um die Informationen zu sehen.
Gerade in moderneren Kfz kommt so eine Vielzahl von Informationen zusammen, die auf einer Vielzahl von Anzeigeeinrichtungen dargestellt sind. Beispielsweise existieren Kfz, bei denen analoge Informationen über Zeigerinstrumente in einem Cockpit dargestellt werden, zusätzliche Informationen in einem Display oder einem Monitor in der Mittelkonsole, die beispielsweise eingestellte Radiosender oder eine Navigation betreffen, und zusätzlich Informationen in die Windschutzscheibe projiziert werden. Die Darstellung der Informationen erfolgt dabei zumeist im Stil des jeweiligen Kraftfahrzeugherstellers. So werden beispielsweise für die Farbgebung und Beleuchtung der analogen Instrumente herstellertypische Farben und Beleuchtungen verwendet. Darüber hinaus werden beispielsweise im Bereich von Navigationssystemen, typische Farbgebung von Kartendarstellungen verwendet, die neben der eigentlich zu befahrenen Strecke Grünflächen, Wasserflächen in Blautönen, Erhebungen in Brauntönen, usw. in verschiedenen Farben darstellen. Insgesamt ergibt sich so um einen Nutzer oder Fahrer eines Kraftfahrzeugs herum eine Darstellung von vielerlei Informationen, im Zusammenspiel mit einer Vielzahl von möglicherweise beleuchteten Bedienungsmöglichkeiten.

Die Druckschrift DE 35 1 44 38 C1 beschäftigt sich mit einer zentralen Bedien- und Anzeigeeinheit zur Steuerung und Überwachung mehrerer Zusatzgeräte in einem Fahrzeug. Dabei sind zusätzliche Bedienelemente vorgesehen, die Grundfunktionen unabhängig von einem ausgewählten Menü direkt ansteuern.

Das Dokument DE 10 2007 024 150 A1 offenbart eine Multifunktionsbedienvorrichtung mit in verschiedenen Farben beleuchteten Bedienelementen. Die Beleuchtungsfarbe einer in einem Anzeigeelement angezeigten Funktion entspricht der Beleuchtungsfarbe eines Bedienelementes.

Die Druckschrift DE 10 2011 121 758 A1 befasst sich mit einem Wechsel zwischen einem transparenten und einem intransparenten Zustand an einem Anzeigeelement. Wenn keine Anzeige erfolgt, kann die Anzeige ausgeblendet werden, um einen Fahrer nicht zu stören.

Das Dokument DE 2008 023 505 A1 beschreibt eine Farbcodierung für verschiedene angezeigte Anwendungen auf einem Display in einem Fahrzeug. Eine Farbcodierung einer Lichtquelle wird mit der Farbcodierung der Anzeige angepasst.

Die Druckschrift DE 10 2006 037 156 A1 betrifft eine interaktive Bedienvorrichtung mit einer Anzeigevorrichtung, die über Sensorinformation, die beispielsweise Gesten eines Nutzers erfasst, gesteuert wird.

Das Dokument DE 10 2008 045 128 A1 beschreibt die Ansteuerung eines anthropomorphen Charakters, der auf einer Anzeige dargestellt wird, basierend auf Zustandsinformation des Fahrzeugs oder eines Nutzers.

Die Druckschrift DE 10 2010 052 609 A1 beschreibt eine Lichtquelle für eine Skalenscheibe deren Farbe gemäß einer Datenquelle gesteuert wird. Dabei wird ggf. auch ein im Fahrzeug generiertes Umgebungslicht in seiner Farbe beispielsweise an eine Temperatur angepasst.

Das Dokument US 2011/0246934 A1 offenbart ein Konzept bei dem mehreren anzuzeigenden Bildern unterschiedliche Farben zugeordnet sind, die bei Auswahl eines Bildes im Hintergrund der Anzeige angezeigt werden.

Die Druckschrift DE 10 2012 206 030 A1 beschreibt ein Konzept zur Ermittlung der Blickrichtung eines Fahrers eines Fahrzeugs, wobei ein Anzeigemodus eines Anzeigegerätes basierend auf der Blickrichtung angepasst wird.

Eine Aufgabe der vorliegenden Erfindung liegt daher darin, ein verbessertes Konzept zur Darstellung von Bildinformation in einem Kraftfahrzeug zu schaffen.

Diese Aufgabe wird gelöst gemäß den anhängigen unabhängigen Ansprüchen.

Ausführungsbeispiele der vorliegenden Erfindung basieren auf der Erkenntnis, dass eine einheitliche Darstellung der verschiedenen Informationen in einem Kraftfahrzeug vorteilhaft sein kann. Ein Nutzer, Betreiber oder Fahrer eines Kraftfahrzeugs hat im Betrieb des Kraftfahrzeugs auf vielerlei Information zu achten. Insbesondere können beim Betreiben eines Kraftfahrzeugs Risikosituationen auftreten, die auf andere Verkehrsteilnehmer oder plötzliche Ereignisse zurückzuführen sind. Je früher eine solche Situation für einen Nutzer eines Kraftfahrzeugs erkennbar ist, umso niedriger lässt sich ein Unfallrisiko halten. Es ist daher eine Erkenntnis von Ausführungsbeispielen, die Darstellung von Bildinformation in einem Kraftfahrzeug, wie beispielsweise auf einem Head-Up-Display oder einer anderen Anzeigevorrichtung, an die Umgebung des Nutzers anzupassen. Eine Anpassung an die Umgebung kann dazu führen, dass plötzliche Ereignisse von einem Nutzer des Kraftfahrzeugs früher oder besser wahrgenommen werden können, da diese aus dem vereinheitlichten oder an die Umgebung angepassten Gesamtbild der Informationsdarstellung in dem Kfz besser hervortreten. Es ist daher ein Kerngedanke von Ausführungsbeispielen Zustandsinformationen einer Umgebung eines Nutzers eines Kraftfahrzeugs zu erfassen, und dargestellte Bildinformation an eine Änderung der Zustandsinformation anzupassen.

Ausführungsbeispiele schaffen daher eine Bildverarbeitungsvorrichtung zur Bestimmung von Bildinformation zur Darstellung in einem Kraftfahrzeug. Die Bildverarbeitungsvorrichtung umfasst dabei eine Recheneinrichtung, die ausgebildet ist, um die Bildinformation zu berechnen. Die Bildverarbeitungsvorrichtung umfasst ferner eine Erfassungseinrichtung zur Erfassung einer oder mehrerer Zustandsinformationen einer Umgebung eines Nutzers des Kraftfahrzeugs. Die Recheneinrichtung ist ausgebildet, um die Bildinformation an eine Änderung der einen oder der mehreren Zustandsinformationen anzupassen.

In Ausführungsbeispielen kann die Recheneinrichtung beispielsweise einer programmierbaren Hardwarekomponente, wie einem Prozessor, einem digitalen Signalprozessor, einem Grafikprozessor, etc., entsprechen. In anderen Worten kann in Ausführungsbeispielen als Recheneinrichtung eine programmierbare Hardwarekomponente derart programmiert sein, dass die Bildinformation an eine Änderung der Zustandsinformation angepasst wird. Die Erfassungseinrichtung zur Erfassung einer oder mehrerer Zustandsinformationen kann in Ausführungsbeispielen vielerlei Ausprägungen oder Implementierungen haben, wie im Folgenden noch näher erläutert werden wird. Beispielsweise kann die Erfassungseinrichtung ausgebildet sein, um Farbinformationen, beispielsweise aus einem Innenraum oder auch aus einer Umgebung eines Kraftfahrzeugs, zu erfassen. Insofern kann die Erfassungseinrichtung ein oder mehrere Sensoren umfassen, die die entsprechenden Informationen, die im Folgenden erläutert werden, erfassen. In manchen Ausführungsbeispielen kann die Erfassungseinrichtung Information auch von anderen Komponenten, wie z.B. einem Speicher, erhalten.

In Ausführungsbeispielen ist daher eine Bildinformation oder eine Darstellung der Bildinformation an eine oder mehrere Zustandsinformationen einer Umgebung eines Nutzers des Kraftfahrzeugs angepasst. Dies kann zu einer Vereinheitlichung der Darstellung der Informationen in einem Kraftfahrzeug führen, die zur Folge haben kann, dass andere Informationen aus der Umgebung, insbesondere plötzliche Ereignisse, besser wahrgenommen werden können, da diese aus der vereinheitlichten Darstellung und Umgebung des Nutzers besser heraustreten.

In einigen Ausführungsbeispielen ist die Erfassungseinrichtung ausgebildet, um als eine oder mehrere Zustandsinformationen zumindest eine Umgebungsfarbinformation des Nutzers des Kraftfahrzeugs zu erfassen. Die Recheneinrichtung kann dann ferner ausgebildet sein, um eine Farbinformation in der Bildinformation an die Umgebungsfarbinformation anzupassen.

In anderen Worten kann in einigen Ausführungsbeispielen Farbinformation der Bildinformation an Farbinformation einer Umgebung des Nutzers angepasst werden. Eine Vereinheitlichung der farblichen Darstellung der Information in einem Kraftfahrzeug mit einer Umgebungsfarbinformation kann zur Folge haben, dass ein Kontrast der Informationsdarstellung in dem Kraftfahrzeug gegenüber der Umgebung oder auch gegenüber einer Innenraumfarbgebung herabgesetzt wird. In anderen Worten ausgedrückt, könnte diese Anpassung dazu führen, dass das Erscheinungsbild der Bildinformation in dem Kraftfahrzeug im Zusammenspiel mit anderen Farbinformationen, die sich aus der Umgebung des Nutzers des Kraftfahrzeugs ergeben, weniger bunt wirkt. Insofern können Ausführungsbeispiele unter Umständen ermöglichen, dass plötzlich auftretende Objekte oder Ereignisse im Gesamtbild eines Nutzers des Kraftfahrzeugs, das sich aus der Informationsdarstellung im Kraftfahrzeug selbst und seiner Umgebung ergibt, besser wahrgenommen werden können, da diese im Gesamtbild des Nutzers besser hervortreten.

In manchen Ausführungsbeispielen kann die Erfassungseinrichtung einen Sensor umfassen, der ausgebildet ist, um zumindest eine Umgebungsfarbinformation einer Umgebung des Kraftfahrzeugs als eine oder mehrere Zustandsinformationen zu erfassen. Die Recheneinrichtung kann dann ausgebildet sein, um eine Farbinformation in der Bildinformation an die Umgebungsfarbinformation des Kraftfahrzeugs anzupassen. Beispielsweise könnte die Farbinformation der Bildinformation mehr in Richtung grün angepasst werden, wenn sich das Kraftfahrzeug über eine Waldstrecke bewegt bei der sich in der Umgebung des Kfz viele Grüntöne ergeben. Die Farbinformation der Bildinformation könnte in Richtung blau angepasst werden, wenn sich das Fahrzeug an einem Sommertag entlang einer Küste bewegt bei der sich in der Umgebung des Kfz viele Blautöne ergeben. Die Farbinformation der Bildinformation könnte sich in Richtung einer Straßen- oder Ladenbeleuchtung ergeben, wenn sich das Fahrzeug nachts oder in der Dämmerung entlang einer Strecke innerorts bewegt. Z.B. wären hier rote und weiße Farbtöne denkbar.
Insofern würde die Bildinformation den Anteil an Farben, der in der Umgebung des Nutzers des Kraftfahrzeugs nicht ohnehin vorkommen, reduzieren. In anderen Worten ausgedrückt, wird ein Nutzer eines Kraftfahrzeugs, der sich mit dem Kraftfahrzeug über eine Waldstrecke bewegt, in seiner Umgebung die Farbe Grün vermehrt wahrnehmen. Die Farbinformation der Bildinformation könnte sich demnach an die grünen Farbtöne der Umgebung des Kraftfahrzeugs anpassen. Ein plötzlich auftauchendes Objekt, wie beispielsweise Wild, das eher in grau-braun-Tönen in Erscheinung tritt, würde aus dem nun gesamt grün gefärbten Wahrnehmungsfeld des Nutzers besser heraustreten, als dies der Fall wäre, wenn weitere grau-braune Komponenten bereits in der Bildinformation vorkämen.
In weiteren Ausführungsbeispielen kann die Erfassungseinrichtung ausgebildet sein, um eine Farbinformation einer Innenraumumgebung des Nutzers in dem Kraftfahrzeug als eine oder mehrere Zustandsinformationen zu erfassen. Die Recheneinrichtung kann dann ausgebildet sein, um eine Farbinformation in der Bildinformation an die Farbinformation der Innenraumumgebung anzupassen. In anderen Worten kann der Innenraum eines Kraftfahrzeugs unterschiedlich beleuchtet sein. Beispielsweise können verschiedene Leuchtelemente im Innenraum sowohl in ihrer Helligkeit als auch in ihrer Farbe angepasst werden. In Ausführungsbeispielen kann daher auch die Darstellungsinformation der Bildinformation nach dem Zustand der Innenraumumgebung des Nutzers des Kraftfahrzeugs gerichtet werden. Insofern können manche Ausführungsbeispiele den Vorteil liefern, dass Bildinformation farblich an die Innenraumumgebung des Nutzers in dem Kraftfahrzeug angepasst dargestellt wird, sodass, wie bereits oben erläutert, ein Gesamtwahrnehmungsbild des Nutzers weniger bunt erscheint. Entsprechend der Erfindung umfasst die Bildinformation Darstellungsinformation für einen Vordergrund und Darstellungsinformation für einen Hintergrund eines darzustellenden Bildes. Die Recheneinrichtung ist ausgebildet, um die Darstellungsinformation für den Hintergrund des darzustellenden Bildes an die eine oder die mehreren Zustandsinformationen anzupassen. In anderen Worten kann in manchen Ausführungsbeispielen bei der Bildinformation zwischen Vordergrundinformation und Hintergrundinformation unterschieden werden. In manchen Ausführungsbeispielen kann die Vordergrundinformation angepasst werden, Entsprechend der Erfindung wird aber die Hintergrundinformation angepasst und in weiteren Ausführungsbeispielen können beide Informationen angepasst werden. Z.B. kann nur die Hintergrundinformation angepasst werden, sodass sich die Hintergrundinformation der Darstellung in dem Kraftfahrzeug an die Zustandsinformationen einer Umgebung und des Nutzers anpassen. Dies kann beispielsweise bezüglich der oben bereits erwähnten Farbinformation geschehen, aber auch andere Umgebungseinflüsse, die im Folgenden noch weiter erläutert werden werden, können dabei Berücksichtigung finden.
Ausführungsbeispiele können so unter Umständen den Vorteil liefern, dass eine Darstellung von Vordergrund und Hintergrund in der Bildinformation ebenfalls an die Umgebung des Nutzers angepasst ist. Beispielsweise könnte die Hintergrunddarstellung farblich an den Hintergrund des Gesamtbildes des Nutzers angepasst sein, z.B. grün auf einer Waldstrecke. In manchen Ausführungsbeispielen kann aus der Kenntnis heraus, das aus solch grünen Hintergründen Gefahrensituationen oftmals mit grau-braunen Objekten zu tun haben, auch die Vordergrundinformation in der Bildinformation derart angepasst sein, dass dieser Farbton vermieden wird. Hierdurch könnte ein etwaiges plötzlich auftauchendes Objekt, das diese Färbung trägt, besser aus dem Gesamtbild des Nutzers hervortreten. In Ausführungsbeispielen sind aber auch andere Varianten möglich.

Die Bildverarbeitungsvorrichtung umfasst entsprechend der Erfindung eine Darstellungseinrichtung, die zur Darstellung der Bildinformation ausgebildet ist. Die Darstellungseinrichtung ist dabei ausgebildet, um zumindest eine Bedieninformation von einem Nutzer zu empfangen, wobei die eine oder die mehreren Zustandsinformationen die zumindest eine Bedieninformation umfassen. Die Darstellungseinrichtung kann beispielsweise als Display, Anzeige, Monitor, Head-Up-Display, etc. ausgebildet sein. Die Bedieninformation kann dabei über ein Bedienelement, wie beispielsweise Knöpfe, Schalter, berührungssensitive Elemente, etc. erfasst werden. In manchen Ausführungsbeispielen kann die Darstellungseinrichtung beispielsweise einem Touch-Screen (zu Deutsch: berührungssensitiver Bildschirm) entsprechen. Insofern kann die Bedieninformation zu einer Anpassung der Darstellung der Bildinformation führen. In Ausführungsbeispielen kann beispielsweise ein Berühren eines solchen Touch-Screens dazu führen, dass die Helligkeit der Darstellung erhöht wird, wohingegen die Helligkeit der Darstellung auch reduziert werden kann, wenn über eine gewisse Zeit keine Berührung stattgefunden hat. Dies kann den Vorteil haben, dass die Bilddarstellung, sofern sie keinen Zusammenhang mit dem direkten Betrieb des Kraftfahrzeugs hat, aus dem Sichtfeld zumindest teilweise ausgeblendet wird. So kann beispielsweise Information über einen eingestellten Radiosender ausgeblendet oder zumindest in der Helligkeit reduziert werden. Erst bei Berühren oder bei Bedienen, z.B. bei Aktivierung eines Bedienelementes im Lenkrad des Kraftfahrzeugs, kann dann die entsprechende Information wieder eingeblendet werden oder mit höherer Helligkeit dargestellt werden. Entsprechend der Erfindung umfasst die Bedieninformation Information über eine Annäherung des Nutzers an die Darstellungseinrichtung. Dies ist beispielsweise denkbar bei kapazitiven Touch-Screens, bei denen sich die Kapazität schon bei der Annäherung des Nutzers an den Bildschirm ändert. Insofern kann die Bildinformation in manchen Ausführungsbeispielen schon bei einer Annäherung des Nutzers an die Darstellungseinrichtung angepasst werden. Die Bedieninformation kann Information über eine Berührung der Darstellungseinrichtung durch den Nutzer umfassen, wie bereits oben erläutert wurde. In weiteren Ausführungsbeispielen kann die Bedieninformation Information über einen Bereich der Darstellungseinrichtung, in dem eine Berührung durch den Nutzer stattgefunden hat, oder Informationen über eine Position des Nutzers in dem Kraftfahrzeug umfassen. Insofern kann eine Änderung der Bildinformation in Abhängigkeit der Position der Berührung durch den Nutzer oder aber in Abhängigkeit der Position des Nutzers in dem Kraftfahrzeug stattfinden. Beispielsweise kann unterschieden werden, ob ein Fahrer oder ein Beifahrer des Kraftfahrzeugs die Bedieninformation liefert. In anderen Ausführungsbeispielen kann die Art der Anpassung oder Änderung der Bildinformation davon abhängen, welche Art von Bedieninformation eingeht, beispielsweise kann dies mit der Position auf einem Touch-Screen zusammenhängen. Zum Beispiel kann die Änderung der Bildinformation eine andere sein wenn ein Ein-Ausschaltbereich berührt wird im Vergleich zu einer Berührung für einen Senderwechsel.
In weiteren Ausführungsbeispielen kann die eine oder die mehreren Zustandsinformationen zumindest eine Information über ein Ereignis in einem System des Kraftfahrzeugs umfassen. In anderen Worten, kann es im System des Kraftfahrzeuges zu Ereignissen kommen, die ebenfalls durch Bedieninformationen oder auch automatisierte Prozesse oder Sensoren detektiert werden, die eine Änderung der Bilddaten in Ausführungsbeispielen veranlassen können. Beispielsweise kann eine Information über ein Ereignis in einem System des Kraftfahrzeugs eine Information über einen Senderwechsel eines Rundfunkempfängers sein. In anderen Worten kann die Bildinformation geändert werden, wenn ein Senderwechsel stattfindet. Information über den Senderwechsel kann auf mehrere Weisen an die Bildverarbeitungsvorrichtung gelangen. Beispielsweise kann die Erfassungseinrichtung eine Information darüber erhalten, dass ein entsprechendes Bedienelement, z.B. ein Knopf einer Fernbedienung, ein Bedienelement im Lenkrad des Kraftfahrzeugs, ein bestimmter Bereich eines Touch-Screens, usw., aktiviert wurde. Ein weiteres Ereignis oder eine weitere Information über ein Ereignis im System des Kraftfahrzeugs kann eine Information über einen Wechsel eines Fahrerprofils in dem Kraftfahrzeug sein.

In anderen Worten kann die Bildinformation individuell an den Fahrer und damit an ein Fahrerprofil angepasst sein. In weiteren Ausführungsbeispielen kann eine Information über einen Wechsel einer Farbe des Innenraumlichtes des Kraftfahrzeugs eine Information über ein Ereignis im System des Kraftfahrzeugs darstellen. Die Änderung der Bildinformation kann dann wie oben beschrieben ausgelöst werden. In weiteren Ausführungsbeispielen kann eine Farbinformation über eine Außenumgebung des Fahrzeugs, die beispielsweise durch einen Sensor erfasst wurde, als Information über ein Ereignis im System des Kraftfahrzeugs berücksichtigt werden. Darüber hinaus kann beispielsweise Lautstärkeinformation über eine Schallwiedergabe in dem Kraftfahrzeug oder eine Sprachausgabeinformation in dem Kraftfahrzeug als Information über das Ereignis herangezogen werden. Insofern kann eine Darstellung der Bildinformation auch eine Lautstärkeinformation oder Sprachausgabeinformation des Kraftfahrzeugs angepasst werden. Ein weiteres Beispiel wäre eine Bewegungsinformation des Kraftfahrzeugs, d.h. beispielsweise Information darüber, ob und wie schnell sich das Kraftfahrzeug bewegt, ob oder wie schnell es gerade beschleunigt oder verzögert, ob es sich gerade in einer Kurve befindet, wie hoch eine Querbeschleunigung ist, usw. Insofern kann die Darstellung der Bildinformation in manchen Ausführungsbeispielen auch an die Fahrsituation des Fahrzeugs angepasst werden.
In Ausführungsbeispielen sind vielerlei Anpassungsmöglichkeiten der Darstellung der Bildinformation denkbar. In einigen Ausführungsbeispielen kann die Recheneinrichtung ausgebildet sein, um die Bildinformation durch eine Veränderung einer Farbe, einer Form, einer Helligkeit, einer Schärfe, einer Größe oder einer Position zumindest eines Bildelementes anzupassen. Die Anpassung der Bildinformation kann sich dabei an der einen oder den mehreren Zustandsinformationen orientieren. In Ausführungsbeispielen kann so die Bilddarstellung in vielerlei Hinsicht an die Zustandsinformation angepasst werden.
In manchen Ausführungsbeispielen umfasst die Bildinformation Darstellungsinformation für einen Vordergrund und Darstellungsinformation entsprechend der Erfindung für einen Hintergrund eines darzustellenden Bildes. Die Rechenreinrichtung ist ausgebildet, um die Darstellungsinformation für den Hintergrund des darzustellenden Bildes an die eine oder die mehreren Zustandsinformationen anzupassen. Die Darstellungsinformation für den Hintergrund umfasst dabei Information über eine Mehrzahl von Hintergrundbildelementen. Die Bildverarbeitungsvorrichtung umfasst ferner eine Darstellungseinrichtung, die zur Darstellung der Bildinformation ausgebildet ist und die ferner ausgebildet ist, um Bedieninformation von einem Nutzer zu empfangen. Die eine oder die mehreren Zustandsinformationen entsprechen dabei einer Bedieninformation die eine Berührung der Darstellungseinrichtung durch einen Nutzer und eine Position, an der der Nutzer die Darstellungseinrichtung berührt hat, anzeigt. Die Recheneinrichtung ist dann ausgebildet, um eine Dichte der Mehrzahl der Hintergrundelemente an der Position zu erhöhen. Insofern kann einem Nutzer ermöglicht werden schon an der Dichte der Mehrzahl der Hintergrundelemente in der Darstellungseinrichtung zu erkennen, wo die Darstellungseinrichtung berührt wurde, und damit welche Funktion ausgelöst wurde. Dies kann insbesondere dann Vorteile bieten, wenn ein dargestelltes Bedienelement durch den Finger der Berührung noch verdeckt ist.

In weiteren Ausführungsbeispielen kann die Bedieninformation eine Berührung der Darstellungseinrichtung durch den Nutzer und eine Position, an der der Nutzer die Darstellungseinrichtung berührt hat, umfassen. Die Recheneinrichtung kann dann ausgebildet sein, um eine Helligkeit eines ersten Hintergrundbildelementes gegenüber einer Helligkeit eines zweiten Hintergrundelementes zu erhöhen, wobei das erste Hintergrundelement näher an der Position liegt als das zweite Hintergrundelement. In anderen Worten kann in einigen Ausführungsbeispielen eine Aufhellung von Hintergrundelementen durchgeführt werden, an der Stelle, an der an der Darstellungseinrichtung eine Bedieninformation empfangen wurde.

In weiteren Ausführungsbeispielen kann die Recheneinrichtung ausgebildet sein, um eine Animation zumindest eines Hintergrundelementes in Richtung der Position darzustellen. In anderen Worten kann ein Nutzer dann sehen, wie sich Hintergrundelemente in Richtung der Position der Berührung bewegen, und kann so auf einfache Art und Weise sehen, an welcher Stelle berührt wurde, bzw. welche Bedieninformation oder -instruktion sich dahinter verbirgt.

Ausführungsbeispiele schaffen ferner ein Verfahren zur Bestimmung von Bildinformation zur Darstellung in einem Kraftfahrzeug. Das Verfahren umfasst ein Berechnen einer Bildinformation und ein Erfassen einer oder mehrerer Zustandsinformationen einer Umgebung eines Nutzers des Kraftfahrzeugs. Das Verfahren umfasst ferner ein Anpassen der Bildinformation an eine Änderung der einen oder der mehreren Zustandsinformationen.

Ausführungsbeispiele schaffen ferner ein Computerprogramm mit einem Programmcode zur Durchführung eines der oben genannten Verfahren, wenn der Programmcode auf einem Computer, einem Prozessor oder einer programmierbaren Hardwarekomponente ausgeführt wird.

Weitere vorteilhafte Ausgestaltungen werden nachfolgend anhand von in den Zeichnungen dargestellten Ausführungsbeispielen, auf welche Ausführungsbeispiele generell jedoch nicht insgesamt beschränkt sind, näher beschrieben. Es zeigen
Fig. 1 ein Ausführungsbeispiel einer Bildverarbeitungsvorrichtung;
Fig. 2 ein Ausführungsbeispiel einer Darstellung von Bildinformation auf einer Darstellungseinrichtung;
Fig. 3 zeigt ein weiteres Ausführungsbeispiel einer Darstellung von Bildinformation auf einer Darstellungseinrichtung bei Berührung der Darstellungseinrichtung;
Fig. 4 illustriert ein weiteres Ausführungsbeispiel einer Darstellung von Bildinformation auf einer Darstellungseinrichtung bei einem Radiosenderwechsel;
Fig. 5 illustriert ein weiteres Ausführungsbeispiel einer Anpassung einer Hintergrundinformation in einer Darstellung von Bildinformation auf einer Darstellungseinrichtung;
Fig. 6 zeigt ein weiteres Ausführungsbeispiel einer Anpassung von Hintergrundelementen in einer Bildinformation auf einer Darstellungseinrichtung;
Fig. 7 zeigt ein weiteres Ausführungsbeispiel einer Anpassung von Hintergrundelementen bei einem Senderwechsel;
Fig. 8 zeigt ein weiteres Ausführungsbeispiel bei einem Senderwechsel;
Fig. 9 zeigt die Anpassung einer Hintergrundbildinformation bei einem Senderwechsel in einem Ausführungsbeispiel;
Fig. 10 zeigt ein weiteres Ausführungsbeispiel mit einer Anpassung von Hintergrundelementen bei einem Senderwechsel;
Fig. 11 zeigt eine weitere Anpassung von Hintergrundelementen in einem Ausführungsbeispiel;
Fig. 12 illustriert einen Senderwechsel mit Anpassung von Hintergrundelementen in einem Ausführungsbeispiel; und
Fig. 13 zeigt ein Blockschaltbild eines Ablaufdiagramms eines Ausführungsbeispiels eines Verfahrens zur Bestimmung von Bildinformation zur Darstellung in einem Kraftfahrzeug.

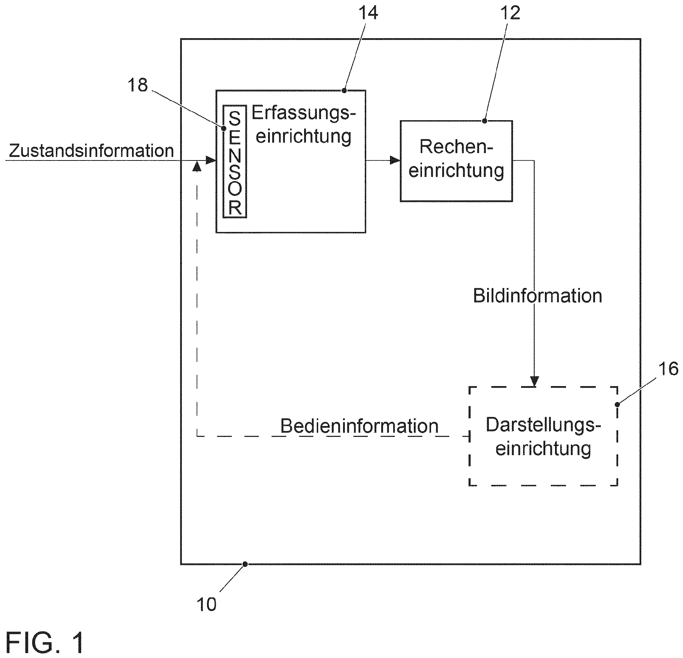

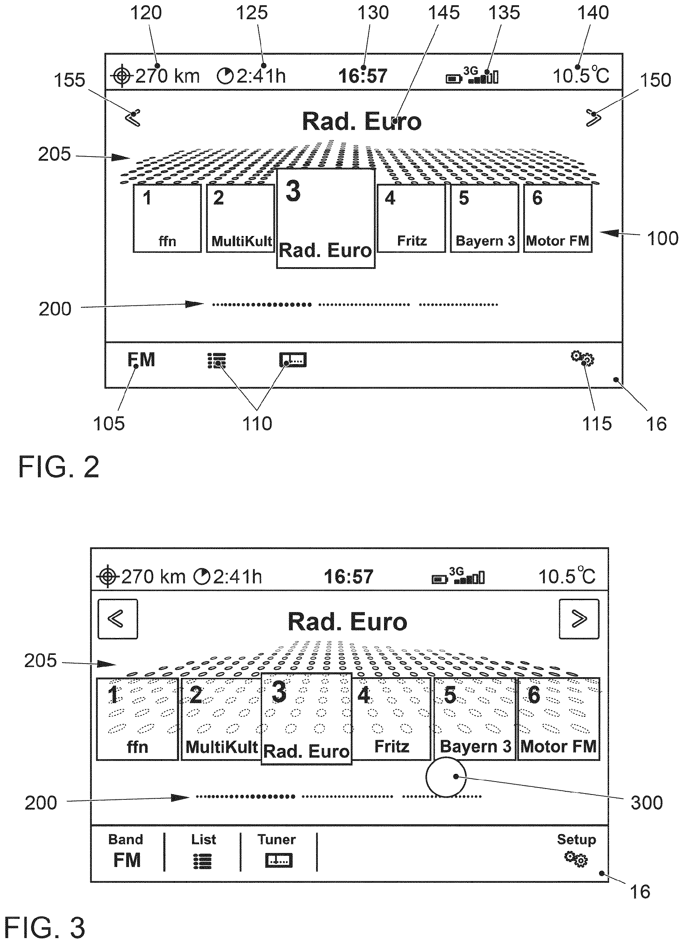

Im Folgenden werden einige Ausführungsbeispiele anhand der Figuren näher erläutert. Fig. 1 zeigt eine Bildverarbeitungsvorrichtung 10 zur Bestimmung von Bildinformationen zur Darstellung in einem Kraftfahrzeug. Ausführungsbeispiele umfassen auch ein Kraftfahrzeug mit einer Bildverarbeitungsvorrichtung. Die Bildverarbeitungsvorrichtung umfasst eine Recheneinrichtung 12, die ausgebildet ist, um die Bildinformation zu berechnen. Die Bildverarbeitungsvorrichtung 10 umfasst ferner eine Erfassungseinrichtung 14 zur Erfassung einer oder mehrerer Zustandsinformationen einer Umgebung eines Nutzers des Kraftfahrzeugs. Die Recheneinrichtung 12 ist ausgebildet, um die Bildinformation an eine Änderung der einen oder der mehreren Zustandsinformationen anzupassen. Wie die Fig. 1 zeigt, sind die Erfassungseinrichtung und die Recheneinrichtung 12 miteinander gekoppelt. Im Folgenden wird zur vereinfachten Darstellung von einer einzelnen Zustandsinformation gesprochen, die stellvertretend auch für mehrere Zustandsinformationen stehen kann. Selbiges gilt für anderen Information(en), wie Bedieninformation, Farbinformation, Bildinformation, Bewegungsinformation, Lautstärkeinformation, usw. Die im Folgenden betrachteten Informationen, seien es eine oder mehrere, können analog und digital vorliegen. Insofern kann eine Information im einfachsten digitalen Fall beispielsweise einem Bit, d.h. einer binären Information, entsprechen. Die betrachteten Informationen können ferner durch entsprechende Signale, die zwischen den einzelnen Komponenten übertragen werden, dargestellt sein. Die Fig. 1 zeigt ferner, als optionale Komponente in der Darstellung mit gestrichelten Linien, eine Darstellungseinrichtung 16. Die Darstellungseinrichtung 16 kann die Bildinformation von der Recheneinrichtung 12 erhalten und darstellen. Die Darstellungseinrichtung 16 ist mit der Recheneinrichtung 12 gekoppelt. In den folgenden Figuren werden einige Darstellungen einer Darstellungseinrichtung 16 näher erläutert. Entsprechend der Erfindung ist die Darstellungseinrichtung 16 zur Darstellung der Bildinformation ausgebildet, um zumindest eine Bedieninformation von dem Nutzer zum empfangen. Die eine oder die mehreren Zustandsinformationen umfassen dann die zumindest eine Bedieninformation, was in der Fig. 1 durch den gestrichelten Pfeil mit Beschriftung "Bedieninformation" dargestellt ist.
In den im Folgenden betrachteten Ausführungsbeispielen ist jeweils die Darstellungseinrichtung 16 gezeigt, die digitale Daten darstellt. Die Darstellungseinrichtung 16 ist in diesen Ausführungsbeispielen als Touch-Screen ausgebildet, und kann so durch Annäherung und Berührung Bedieninformation von dem Nutzer empfangen. In anderen Ausführungsbeispielen kann die Darstellungseinrichtung 16 auch einem Head-Up-Display entsprechen. Die Fig. 2 zeigt ein Ausführungsbeispiel einer Darstellungseinrichtung 16, die Bildinformation darstellt. Die Bildinformation ist dabei aus mehreren Informationselementen zusammengesetzt, die sich im Vordergrund oder im Hintergrund der Darstellung befinden. Insofern umfasst die Darstellung Darstellungsinformation für einen Hintergrund und Darstellungsinformation für einen Vordergrund. In den folgenden betrachteten Ausführungsbeispielen ist im Vordergrund eine Auswahl von Radiosendern 100 dargestellt, die durch benachbarte horizontal orientierte Quadrate symbolisiert werden. Ein Sender mit der Nummer 3, hier als Beispiel Radio Euro, ist derzeit ausgewählt, was durch eine vergrößerte Darstellung dieses Quadrates angedeutet ist.

Im Vordergrund der Darstellung befinden sich ferner Elemente, die am Rand der Anzeige angezeigt werden, wie das Modulationsverfahren des ausgewählten Radiosenders 105, hier Frequenzmodulation (FM), Menüauswahltasten 110 und eine Menütaste für die Einstellungen 115, die am unteren Rand der Darstellung gezeigt sind. Am oberen Rand der Darstellung finden sich weitere Vordergrundbildelemente wie z.B. die Entfernung zum nächsten Ziel 120, hier 270 km, sowie die bis zur Erreichung des Ziels benötigte Zeit 125, hier 2 h 41 min. Am oberen Rand in der Mitte befindet sich ferner eine Darstellung der Uhrzeit 130 sowie eine Darstellung 135, die den Zustand eines angeschlossenen Mobilfunkgerätes wiedergibt, hier ein Batteriesymbol mit einer Ladezustandsanzeige und einer Empfangspegelanzeige zur Anzeige des Empfangspegels sowie der verfügbaren Zugriffstechnologie, hier dritte Generation (3G). Am rechten oberen Rand befindet sich ferner eine Temperaturanzeige 140. Kurz unter dem oberen Rand befindet sich ferner eine Informations-oder Textanzeige 145, die den ausgewählten Radiosender wiedergibt sowie links und rechts davon 2 Bedienelemente 150 und 155, die durch Berührung einer Auswahl der Radiosender in aufsteigender bzw. absteigender Reihenfolge erlauben.

In der Darstellung der Fig. 2 sind ferner mehrere Hintergrundelemente umfasst, die sich über und unter der verfügbaren und des ausgewählten Radiosenders 100 befinden. Unter der Darstellung 100 für die Radiosender befindet sich eine Hintergrunddarstellung 200, die sich aus Punkten zusammensetzt, die in Linienzügen zusammengefasst sind. Die Fig. 2 zeigt dabei 3 Linienzüge, wobei der äußerst linke aus helleren Punkten zusammengesetzt ist. Es ist zu erkennen, dass die Punkte, der linken Linie heller ausgebildet sind. Hier wird angenommen, dass momentan die ersten sechs Senderspeicher von insgesamt 18 Senderspeichern für Radiosender angezeigt werden. Die Linien 200 zeigen durch ihre Helligkeit an, welches Drittel der Radiosender ausgewählt wurde. Die Fig. 2 zeigt ferner eine Anzahl von Bildelementen 205, die oberhalb der Darstellung 100 für die Radiosender liegen. In dem betrachteten Ausführungsbeispiel sind diejenigen Bildpunkte, die nahe bei dem ausgewählten Radiosender liegen unschärfer und größer dargestellt, sodass aus der Hintergrunddarstellung auch hervorgeht, welcher Radiosender bzw. welcher Senderspeicher ausgewählt wurde.

In einem Ausführungsbeispiel ist die Bildverarbeitungsvorrichtung 10 aus der Fig. 1 mit einer Erfassungseinrichtung 14 ausgebildet, die eine oder mehrere Zustandsinformationen zumindest in Form einer Umgebungsfarbinformation eines Nutzers des Fahrzeugs erfasst. Die Recheneinrichtung 12 ist dann ausgebildet, um eine Farbinformation der Bildinformation an die Umgebungsfarbinformation anzupassen. In der Darstellung der Fig. 2 könnte sich dies so äußern, dass Farbinformation aus der Umgebung des Nutzers auf die Farbinformation für die Darstellungen im Vordergrund und im Hintergrund auswirkt. Insofern kann beispielsweise die Erfassungseinrichtung 14 einen Sensor 18 umfassen, der in der Fig. 1 ebenfalls als optionale Komponente dargestellt ist, und der ausgebildet ist, um zumindest eine Umgebungsfarbinformation einer Umgebung des Kraftfahrzeugs als eine oder mehrere Zustandsinformationen zu erfassen. Die Recheneinrichtung 12 ist dann ausgebildet, um eine Farbinformation in der Bildinformation an die Umgebungsfarbinformation des Kraftfahrzeugs anzupassen. Beispielsweise kann der Sensor 18 Farbinformation aus dem Umgebungslicht umfassen, z.B. indem der Sensor als farbsensitive Fotodiode/-transistor oder als eine Mehrzahl von farbsensitiven Fotodioden oder Fototransistoren ausgebildet ist. So kann die Darstellung der Fig. 2 an eine Umgebungsfarbe des Kraftfahrzeugs angepasst werden, beispielsweise in Grüntönen bei Fahrt auf einer Waldstrecke, in Blautönen bei Fahrt an der Küste bei blauem Himmel, oder auch entsprechend einer Nachtbeleuchtung bei Nachtfahrt je nach Farbe einer Straßenbeleuchtung.

In einem weiteren Ausführungsbeispiel ist die Erfassungseinrichtung ausgebildet um eine Farbinformation einer Innenraumumgebung des Nutzers in dem Kraftfahrzeug als eine oder mehrere Zustandsinformationen zu erfassen. Die Erfassung im Innenraum des Fahrzeugs kann dabei ebenfalls durch einen Sensor oder aber auch durch digitale Information oder andere Information stattfinden. Beispielsweise besteht die Möglichkeit, dass ein Nutzer des Kraftfahrzeugs den Farbton der Innenraumbeleuchtung selbst einstellt. Diese Einstellung könnte dann entsprechend übernommen und in der Darstellung der Bildinformation der Fig. 2 wiedergespiegelt werden.

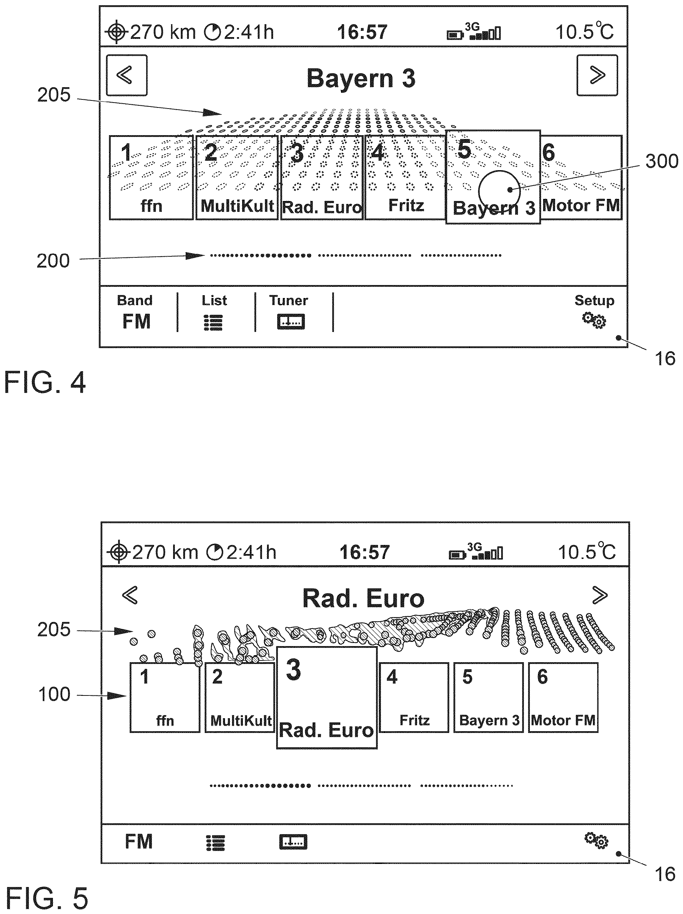

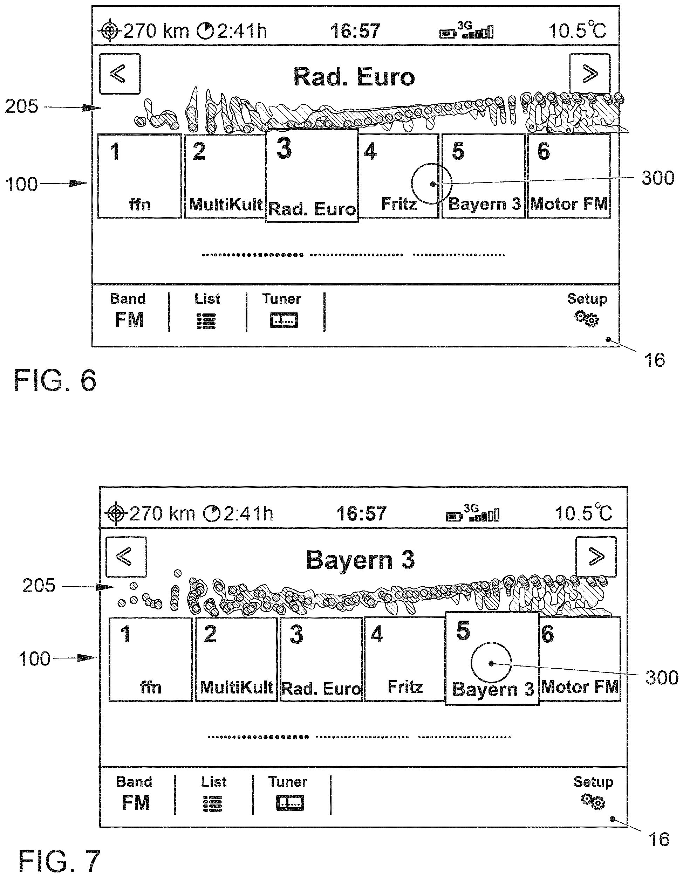

Die Fig. 3 illustriert ein weiteres Ausführungsbeispiel bei dem die Darstellungseinrichtung 16 zur Erfassung von Bedieninformation ausgebildet ist. Die in den folgenden Figuren gezeigten Darstellungen umfassen die gleichen Elemente wie die Darstellung der Fig. 2. Auf eine wiederholte Beschreibung wird daher verzichtet. Die Fig. 3 zeigt eine Bedieninformation 300, die durch die Berührung des Touch-Screens durch den Nutzer hervorgerufen wird. Wie die Fig. 3 zeigt werden die Hintergrundelemente 205 durch diese Berührung verändert. Konkret werden hier die Elemente der Hintergrunddarstellung dunkler, und weniger hervorgehoben, d.h. sie werden ausgeblendet. Im Folgenden wird angenommen, dass der Sender 5, hier beispielsweise Bayern 3, ausgewählt wird. Die Fig. 4 zeigt wie das Quadrat, welches den Radiosender Bayern 3 mit der Nummer 5 repräsentiert, nun hervorgehoben wird. Die Fig. 4 zeigt ferner, dass die Hintergrundbildelemente 205 nun wieder aufgehellt werden. Insofern kann in der Zusammenschau in Ausführungsbeispielen eine Hintergrundinformation eine Art Welle darstellen, die durch entsprechende Ausleuchtung der Hintergrundelemente eine Information anzeigt. Ferner ist anhand der Fig. 2, 3 und 4 zu sehen, dass in dem Moment, wo eine Berührung stattfindet, siehe Fig. 3, die Auswahl der Senderelemente 100, hier die horizontal angeordneten Quadrate, insgesamt vergrößert werden, sodass eine verbesserte Erkennbarkeit für den Nutzer ermöglicht wird. Darüber hinaus zeigen die Hintergrundelemente 200 keine Veränderung zwischen den Fig. 2, 3 und 4. Die Hintergrundelemente 200 könnten beispielsweise anzeigen, dass die hier gezeigten Radiosender 1-6, die ersten sechs oder das erste Drittel von insgesamt 18 Radiosendern anzeigen, wobei beispielsweise auch die Bedienelemente 155 dazu verwendet werden können, dass zweite Drittel, Radiosender 7-12, und das dritte Drittel, Radiosender 13-18, auszuwählen.
Insofern zeigen die Fig. 2-4, dass die Recheneinrichtung 12 ausgebildet ist, um die Darstellungsinformation für den Hintergrund des darzustellenden Bildes an die eine oder die mehreren Zustandsinformationen anzupassen. Die Zustandsinformation im vorliegenden Ausführungsbeispiel entspricht dann einer Bedieninformation, die durch Annähern oder Berühren des Touch-Screens der Darstellungseinrichtung 16 erfasst wird.
Die Darstellungseinrichtung 16 ist insofern ausgebildet, um zumindest eine Bedieninformation von dem Nutzer zum empfangen. In Ausführungsbeispielen kann diese Bedieninformation eine Annäherung des Nutzers an die Darstellungseinrichtung 16, eine Information über eine Berührung der Darstellungseinrichtung 16 durch den Nutzer, eine Information über einen Bereich der Darstellungseinrichtung 16, in dem eine Berührung durch den Nutzer stattgefunden hat, oder Information über eine Position des Nutzers in dem Kraftfahrzeug umfassen. Beispielsweise könnte eine Veränderung der Bilddarstellung abhängig davon erfolgen, ob ein Fahrer oder ein Beifahrer des Kraftfahrzeugs die Darstellungseinrichtung 16 berührt oder sich ihr annähert.
Insofern illustrieren die Fig. 2-4 ein Ausführungsbeispiel bei dem die Bildinformation Darstellungsinformation für einen Vordergrund und Darstellungsinformation für einen Hintergrund eines darzustellenden Bildes umfasst. Die Recheneinrichtung 12 ist dabei ausgebildet um die Darstellungsinformation für den Hintergrund des darzustellenden Bildes an die eine oder die mehreren Zustandsinformationen anzupassen. Die Darstellungsinformation für den Hintergrund umfasst dabei Informationen über eine Mehrzahl von Hintergrundbildelementen, die in den Fig. 2-4 als Bildpunkte, die Pixeln oder anderen flächigen Bildeinheiten entsprechen. So wird entsprechend der Erfindung hier eine Dichte der Mehrzahl der Hintergrundelemente an der Position, an der die Berührung entstand, erhöht. Ein weiteres Ausführungsbeispiel ist in den Fig. 5-7 dargestellt. Die Fig. 5-7 zeigen wieder eine Darstellungseinrichtung 16, die entsprechende Bildinformation darstellt. Diese Bildinformation umfasst Vordergrunddarstellungsinformation und Hintergrunddarstellungsinformation. Wie bereits oben erwähnt, wird bezüglich der Elemente im Vordergrund auf die Beschreibung der Fig. 2 verwiesen. Die Fig. 5, 6 und 7 illustrieren einen Wechsel eines Radiosenders, wobei die Fig. 6 eine erste Berührung zeigt und die Fig. 7 die Auswahl des neuen Radiosenders. Wie in dem vorangehenden Ausführungsbeispiel wird der Radiosender von Speicherplatz 3, Radio Euro, auf Speicherplatz 5, Bayern 3, geändert. Die Fig. 5-7 illustrieren dabei wieder eine Mehrzahl von Hintergrundbildelementen 205, die sich in Abhängigkeit der Zustandsinformation, hier der Bedieninformation durch den Nutzer, verändern. In der Fig. 5 sind die Hintergrundelemente 205 zunächst wellenförmig und unscharf dargestellt und dabei relativ dunkel. Bei der ersten Berührung, die in der Fig. 6 dargestellt ist, d.h. bei Eingang der Bedieninformation 300, werden die Hintergrundelemente aufgehellt, und bewegen sich in einer wellenförmigen Animation.
Darüber hinaus steigt die Dichte der Hintergrundelemente 205 und zur besseren Erkennbarkeit der verfügbaren Radiosender werden die einzelnen Quadrate der Vordergrunddarstellung 100 vergrößert. Die Fig. 7 illustriert dann die Auswahl des neuen Radiosenders, hier Senderspeicherplatz 5 mit Bayern 3, wobei erkennbar ist, dass nunmehr die Hintergrundelemente sich auf diesen ausgewählten Speicherplatz hinzubewegen, ihre Helligkeit zunimmt, und die Dichte verändert wird. Insofern ist die Recheneinrichtung ausgebildet, um eine Helligkeit eines ersten Hintergrundbildelementes gegenüber einer Helligkeit eines zweiten Hintergrundbildelementes zu erhöhen, wobei das erste Hintergrundbildelement näher an der Position liegt, die durch die Bedieninformation dargestellt wird, als das zweite Hintergrundbildelement.
Insofern können die Hintergrundbildelemente in Richtung auf die Position der Berührung hin aufgehellt werden. Es ist anzumerken, dass die vorangehenden Ausführungsbeispiele hinsichtlich einer Bedieninformation erläutert wurden, die auf eine Berührung der Darstellungseinrichtung 16 zurückgeht. In anderen Ausführungsbeispielen kann diese Bedieninformation 300 auch einer Annäherung ohne folgende Berührung entsprechen. Die Fign. 5-7 zeigen ferner, dass in einem Ausführungsbeispiel die Recheneinrichtung 12 ausgebildet sein kann, um eine Animation zumindest eines Hintergrundbildelementes in Richtung auf die Position darzustellen.

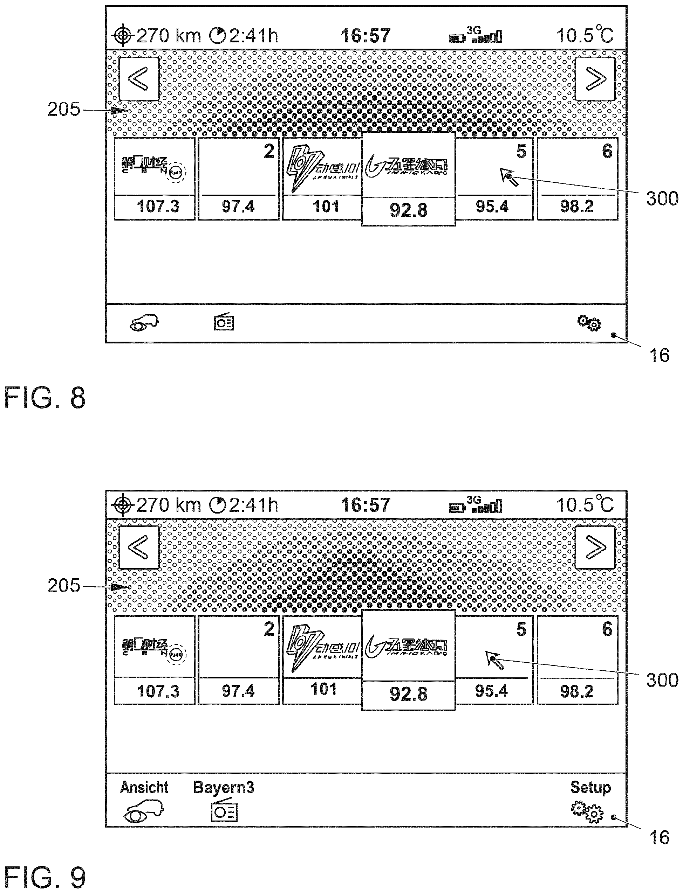

Die Fig. 8, 9, 10, 11, 12 illustrieren ein weiteres Ausführungsbeispiel bei dem Hintergrundinformation 205, die sich aus einzelnen Hintergrundbildelementen zusammensetzt, entsprechend verändert wird. Die Fig. 8-12 zeigen wieder eine Darstellungseinrichtung 16 mit einer Darstellung einer Auswahl von Radiosendern, die in diesem Fall auf verschiedenen Senderplätzen hinterlegt sind, und für die einzelne Symbole angezeigt werden. Die Auswahl der Radiosender 100 stellt sich wiederum als horizontale Anordnung von Quadraten dar, wobei ein ausgewähltes Quadrat und damit ein aktuell ausgewählter Radiosender vergrößert, d.h. hervorgehoben, dargestellt wird. Im Hintergrund des dargestellten Bandes befindet sich eine rasterförmige Anordnung von Bildpunkten 205, die in der Fig. 8 ausgeblendet sind, wobei die Helligkeit zum ausgewählten Radiosender, d.h. zum hervorgehobenen Quadrat hin, zunimmt. Fig. 8 illustriert einen Zeiger, hier als einfacher Mauszeiger dargestellt, der zur Bedienung verwendet wird. Dieser Zeiger könnte beispielsweise mit einem Bedienrad oder einer anderen Bedienvorrichtung bewegt werden, sodass die Bedieninformation 300 hier über ein entsprechendes Eingabegerät erzeugt wird.

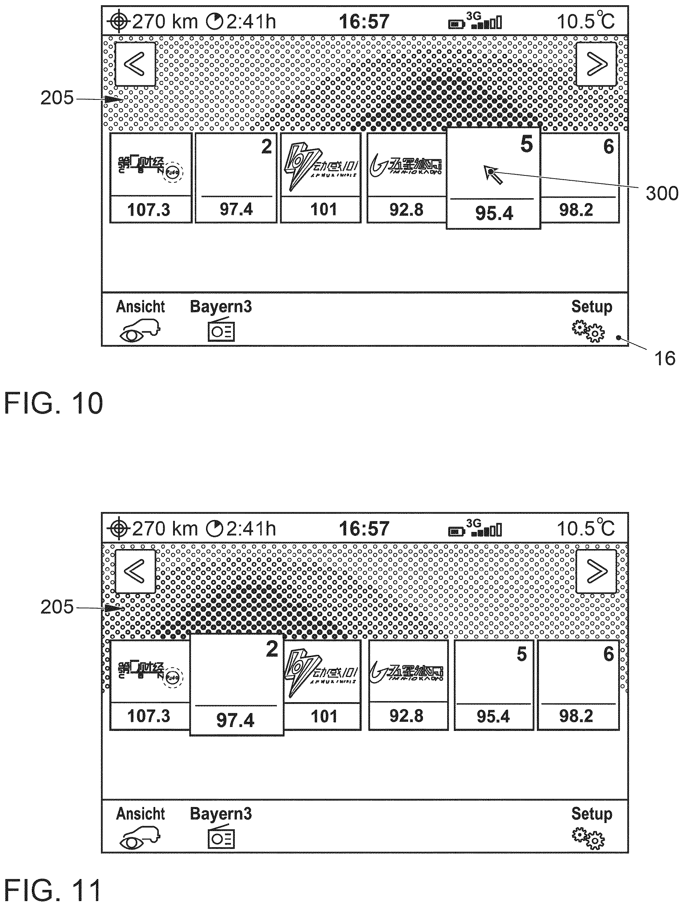

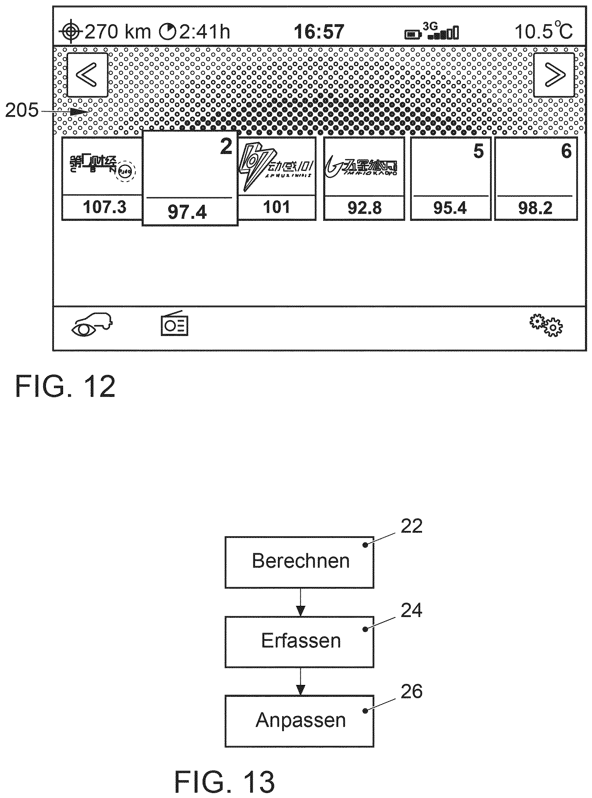

Die Fig. 9 zeigt bereits, dass durch Bewegen des Mauszeigers die Hintergrundelemente 205 aufgehellt werden. In der Fig. 10 wird nun auf den Senderplatz 5 gewechselt, wobei hier bei den Hintergrundelementen 205 erkennbar ist, dass der Bereich der aufgehellten Elemente sich auf den ausgewählten Sender zubewegt. Die Fig. 11 illustriert ein Ausführungsbeispiel bei dem nun der Senderspeicherplatz 2 ausgewählt wird. Auch hier ist zu erkennen, dass sich die Aufhellung der Hintergrundelemente 205 in Richtung des Senderspeicherplatzes 2 bewegt. Fig. 12 zeigt nun den statischen Zustand, d.h. der Mauszeiger wird ausgeblendet nachdem für eine gewisse Zeit keine Aktivität vorhanden war. Die Hintergrundelemente 205 werden dann wieder ausgeblendet, wie dies in der Fig. 8 gezeigt ist. Insofern illustriert auch das Ausführungsbeispiel der Fig. 8-12, wie beispielsweise Hintergrundelemente in ihrer Helligkeit, oder auch in einer Dichte der aufgehellten Hintergrundelemente, an die Zustandsinformation, hier Bedieninformationen durch ein Eingabegerät, angepasst werden.

Wie bereits oben erläutert, können in Ausführungsbeispielen sichtbare Reaktionen des Hintergrunds bei bestimmten Events und Änderungen realisiert werden. Beispielsweise kann eine Hintergrundinformation auf verschiedene Einflüsse reagieren, z.B. eine Nutzerinteraktion in Form von Bedieninformation. Diese Bedieninformation kann eine Annäherung, eine Berührung (auch engl. "touch"), eine Seite der Bedienung, d.h. Fahrer- oder Beifahrerseite, eine Position der Bedienung usw. umfassen. In weiteren Ausführungsbeispielen können die eine oder die mehreren Zustandsinformationen zumindest eine Information über ein Ereignis in einem System des Kraftfahrzeugs umfassen. Solche sogenannten Systemevents (von engl. "event": Ereignis) kann dem oben besprochenen Senderwechsel eines Rundfunksenders entsprechen. In anderen Ausführungsbeispielen kann eine Information über einen Wechsel eines Fahrerprofils in dem Kraftfahrzeug, eine Information über einen Wechsel einer Farbe eines Innenraumlichtes des Kraftfahrzeugs, eine Farbinformation über eine Außenumgebung des Kraftfahrzeugs, eine Lautstärkeinformation über eine Schallwiedergabe in dem Kraftfahrzeug, eine Sprachausgabeinformation in dem Kraftfahrzeug oder eine Bewegungsinformation des Kraftfahrzeugs umfasst sein. Beispielsweise kommen hier Informationen über die Fahrphysik, wie beispielsweise eine Längs- der Querbeschleunigung, oder -verzögerung in Frage.

In weiteren Ausführungsbeispielen kann die Recheneinrichtung 12 ausgebildet sein, um die Bildinformation, sei es Hintergrund oder Vordergrund, durch eine Veränderung einer Farbe, einer Form, einer Helligkeit, einer Schärfe, einer Größe oder einer Position zumindest eines Bildelementes anzupassen. Beispielsweise besteht hier die Möglichkeit Hintergrundbestandteile zu vergrößern, z.B. bei Näherung eines Fingers zur Bedienung. Hintergrundbestandteile können die Form dort verändern, wo eine Bedienung stattfindet, z.B. wo der Finger den Bildschirm zuletzt berührt hat. Hintergrundbestandteile können darüber hinaus ihre Helligkeit verändern, je nach dem, beispielsweise wie laut die Musik oder eine andere Schallwiedergabe in einem Kfz eingestellt ist.

Die Fig. 13 illustriert ein Blockschaltbild eines Ablaufdiagramms eines Ausführungsbeispiels eines Verfahrens zur Bestimmung von Bildinformation zur Darstellung in einem Kraftfahrzeug. Das Verfahren umfasst ein Berechnen 22 einer Bildfunktion und ein Erfassen 24 einer oder mehrerer Zustandsinformationen einer Umgebung eines Nutzers des Kraftfahrzeugs. Das Verfahren umfasst ferner ein Anpassen 26 der Bildinformation an eine Änderung der einen oder der mehreren Zustandsinformationen.

Ein weiteres Ausführungsbeispiel entspricht einem Computerprogramm oder einem Computerprogrammprodukt, beispielsweise einem Datenträger mit dem Computerprogramm, zur Durchführung eines der oben beschriebenen Verfahren, wenn das Computerprogramm auf einer programmierbaren Hardwarekomponente wie beispielsweise einem Prozessor oder ähnlichem ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computer-lesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Bildverarbeitungsvorrichtung
- 12: Recheneinrichtung
- 14: Erfassungseinrichtung
- 16: Darstellungseinrichtung
- 18: Sensor
- 100: Darstellung von Radiosendern
- 105: Modulationsverfahren des ausgewählten Radiosenders
- 110: Menüauswahltasten
- 115: Menütaste für Einstellungen
- 120: Entfernung zum Ziel
- 125: Zeit zum Ziel
- 130: Uhrzeit
- 135: Status Mobilfunkgerät
- 140: Temperaturanzeige
- 145: Informationsanzeige für Radiosender
- 150: Auswahltaste
- 155: Auswahltaste
- 200: Hintergrunddarstellung
- 205: Hintergrundbildelemente
- 300: Bedieninformation

## Patentansprüche

1. Bildverarbeitungsvorrichtung (10) zur Bestimmung von einer Bildinformation geeignet zur Darstellung in einem Kraftfahrzeug, mit einer Recheneinrichtung (12), die ausgebildet ist, um die Bildinformation zu berechnen, und einer Erfassungseinrichtung (14) zur Erfassung einer oder mehrerer Zustandsinformationen einer Umgebung eines Nutzers des Kraftfahrzeugs, wobei die Recheneinrichtung (12) ausgebildet ist, um die Bildinformation an eine Änderung der einen oder der mehreren Zustandsinformationen anzupassen, wobei die Bildinformation Darstellungsinformation für einen Vordergrund und Darstellungsinformation für einen Hintergrund eines darzustellenden Bildes umfasst, wobei die Recheneinrichtung (12) ausgebildet ist, um die Darstellungsinformation für den Hintergrund des darzustellenden Bildes an die eine oder die mehreren Zustandsinformationen anzupassen, wobei die Darstellungsinformation für den Hintergrund Information über eine Mehrzahl von Hintergrundbildelementen, die Bildpunkten oder anderen flächigen Bildeinheiten entsprechen, umfasst, und wobei die Bildverarbeitungsvorrichtung (10) ferner eine Darstellungseinrichtung (16) umfasst, die zur Darstellung der Bildinformation ausgebildet ist und die ferner ausgebildet ist, um Bedieninformation von einem Nutzer zu empfangen, wobei die eine oder die mehreren Zustandsinformationen zumindest einer Bedieninformation entsprechen, die eine Annäherung eines Nutzers an die Darstellungseinrichtung (16) oder eine Berührung der Darstellungseinrichtung (16) durch einen Nutzer und eine Position, an die sich der Nutzer angenähert oder die Darstellungseinrichtung (16) berührt hat, anzeigt, und wobei die Recheneinrichtung (12) ausgebildet ist, um eine Dichte der Mehrzahl der Hintergrundbildelemente an der Position zu erhöhen.

2. Bildverarbeitungsvorrichtung (10) gemäß Anspruch 1, wobei die Erfassungseinrichtung (14) ausgebildet ist, um als eine oder mehrere Zustandsinformationen zumindest eine Umgebungsfarbinformation eines Nutzers des Kraftfahrzeugs zu erfassen und die Recheneinrichtung (12) ausgebildet ist, um eine Farbinformation in der Bildinformation an die Umgebungsfarbinformation anzupassen.

3. Bildverarbeitungsvorrichtung (10) gemäß Anspruch 2, bei der die Erfassungseinrichtung (14) einen Sensor umfasst, der ausgebildet ist, um zumindest eine Umgebungsfarbinformation einer Umgebung des Kraftfahrzeugs als eine oder mehrere Zustandsinformationen zu erfassen, wobei die Recheneinrichtung (12) ausgebildet ist, um eine Farbinformation in der Bildinformation an die Umgebungsfarbinformation des Kraftfahrzeugs anzupassen.

4. Bildverarbeitungsvorrichtung (10) gemäß Anspruch 2 oder 3, bei der die Erfassungseinrichtung (14) ausgebildet ist, um eine Farbinformation einer Innenraumumgebung des Nutzers in dem Kraftfahrzeug als eine oder mehrere Zustandsinformationen zu erfassen, wobei die Recheneinrichtung (12) ausgebildet ist, um eine Farbinformation in der Bildinformation an die Farbinformation der Innenraumumgebung anzupassen.

5. Bildverarbeitungsvorrichtung (10) gemäß einem der vorangehenden Ansprüche, wobei die Bildinformation Darstellungsinformation für einen Vordergrund und Darstellungsinformation für einen Hintergrund eines darzustellenden Bildes umfasst, wobei die Recheneinrichtung (12) ausgebildet ist, um die Darstellungsinformation für den Hintergrund des darzustellenden Bildes an die eine oder die mehreren Zustandsinformationen anzupassen.

6. Bildverarbeitungsvorrichtung (10) gemäß Anspruch 5, wobei die Bedieninformation Information über einen Bereich der Darstellungseinrichtung (16), in dem eine Berührung durch einen Nutzer stattgefunden hat, oder Information über eine Position des Nutzers in dem Kraftfahrzeug umfasst.

7. Bildverarbeitungsvorrichtung (10) gemäß einem der vorangehenden Ansprüche, wobei die eine oder die mehreren Zustandsinformationen zumindest eine Information über ein Ereignis in einem System des Kraftfahrzeugs umfasst.

8. Bildverarbeitungsvorrichtung (10) gemäß Anspruch 7, wobei die zumindest eine Information über das Ereignis in dem System des Kraftfahrzeugs eine Information über einen Senderwechsel eines Rundfunkempfängers, eine Information über einen Wechsel eines Fahrerprofils in dem Kraftfahrzeug, eine Information über einen Wechsel einer Farbe eines Innenraumlichtes des Kraftfahrzeugs, eine Farbinformation über eine Außenumgebung des Kraftfahrzeugs, eine Lautstärkeinformation über eine Schallwiedergabe in dem Kraftfahrzeug, eine Sprachausgabeinformation in dem Kraftfahrzeug, oder eine Bewegungsinformation des Kraftfahrzeugs umfasst.

9. Bildverarbeitungsvorrichtung (10) gemäß einem der vorangehenden Ansprüche, bei der die Recheneinrichtung (12) ausgebildet ist, um die Bildinformation durch eine Veränderung einer Farbe, einer Form, einer Helligkeit, einer Schärfe, einer Größe oder einer Position zumindest eines Bildelementes anzupassen.

10. Bildverarbeitungsvorrichtung (10) gemäß Anspruch 1, wobei die Recheneinrichtung (12) ausgebildet ist, um eine Helligkeit eines ersten Hintergrundbildelementes gegenüber einer Helligkeit eines zweiten Hintergrundbildelementes zu erhöhen, wobei das erste Hintergrundelement näher an der Position liegt als das zweite Hintergrundelement.

11. Bildverarbeitungsvorrichtung (10) gemäß Anspruch 1, wobei die Recheneinrichtung (12) ausgebildet ist, um eine Animation zumindest eines Hintergrundbildelementes in Richtung der Position darzustellen.

12. Verfahren zur Bestimmung von einer Bildinformation geeignet zur Darstellung in einem Kraftfahrzeug, mit
Berechnen (22) einer Bildinformation, wobei die Bildinformation Darstellungsinformation für einen Vordergrund und Darstellungsinformation für einen Hintergrund eines darzustellenden Bildes umfasst;
Erfassen (24) einer oder mehrerer Zustandsinformationen einer Umgebung eines Nutzers des Kraftfahrzeugs;
Anpassen (26) der Bildinformation an eine Änderung der einen oder der mehreren Zustandsinformationen, wobei die Darstellungsinformation für den Hintergrund des darzustellenden Bildes an die eine oder die mehreren Zustandsinformationen angepasst wird, wobei die Darstellungsinformation für den Hintergrund Information über eine Mehrzahl von Hintergrundbildelementen, die Bildpunkten oder anderen flächigen Bildeinheiten entsprechen, umfasst;
Darstellen der Bildinformation;
Empfangen von Bedieninformation von einem Nutzer, wobei die eine oder die mehreren Zustandsinformationen zumindest einer Bedieninformation entsprechen, die eine Annäherung eines Nutzers an die Darstellungseinrichtung (16) oder eine Berührung der Darstellungseinrichtung (16) durch einen Nutzer und eine Position, an die sich der Nutzer angenähert oder die Darstellungseinrichtung (16) berührt hat, anzeigt; und Erhöhen einer Dichte der Mehrzahl der Hintergrundbildelemente an der Position.

13. Computerprogramm zur Durchführung des Verfahrens nach Anspruch 12, wenn das Computerprogramm auf einer programmierbaren Hardwarekomponente abläuft.

## Claims

1. Image processing apparatus (10) for determining a piece of image information suitable for representation in a motor vehicle, having a calculation device (12) configured to calculate the image information, and a capture device (14) for capturing one or more pieces of state information of an environment of a user of the motor vehicle, wherein the calculation device (12) is configured to adapt the image information to a change in the one or more pieces of state information, wherein the image information comprises representation information for a foreground and representation information for a background of an image that is to be represented, wherein the calculation device (12) is configured to adapt the representation information for the background of the image that is to be represented to the one or more pieces of state information, wherein the representation information for the background comprises information relating to a plurality of background image elements which correspond to image points or other two-dimensional image units, and wherein the image processing apparatus (10) furthermore comprises a representation device (16) that is configured to represent the image information and is furthermore configured to receive operating information from a user, wherein the one or more pieces of state information correspond to at least one piece of operating information that indicates an approach of a user toward the representation device (16) or touching of the representation device (12) by a user and a position at which the user has approached or touched the representation device (12), and wherein the calculation device (12) is configured to increase a density of the plurality of background image elements at that position.

2. Image processing apparatus (10) according to Claim 1, wherein the capture device (14) is configured to capture, as one or more pieces of state information, at least one piece of environment colour information of a user of the motor vehicle, and the calculation device (12) is configured to adapt a piece of colour information in the image information to the environment colour information.

3. Image processing apparatus (10) according to Claim 2, wherein the capture device (14) comprises a sensor that is configured to capture, as one or more pieces of state information, at least one piece of environment colour information of an environment of the motor vehicle, wherein the calculation device (12) is configured to adapt a piece of colour information in the image information to the environment colour information of the motor vehicle.

4. Image processing apparatus (10) according to Claim 2 or 3, wherein the capture device (14) is configured to capture, as one or more pieces of state information, a piece of colour information of an interior environment of the user in the motor vehicle, wherein the calculation device (12) is configured to adapt a piece of colour information in the image information to the colour information of the interior environment.

5. Image processing apparatus (10) according to one of the preceding claims, wherein the image information comprises representation information for a foreground and representation information for a background of an image that is to be represented, wherein the calculation device (12) is configured to adapt the representation information for the background of the image that is to be represented to the one or more pieces of state information.

6. Image processing apparatus (10) according to Claim 5, wherein the operating information comprises information relating to a region of the representation device (16) in which touching by a user has taken place or information relating to a position of the user in the motor vehicle.

7. Image processing apparatus (10) according to one of the preceding claims, wherein the one or more pieces of state information comprise at least one piece of information relating to an event in a system of the motor vehicle.

8. Image processing apparatus (10) according to Claim 7, wherein the at least one piece of information relating to the event in the system of the motor vehicle comprises a piece of information relating to a station change of a radio receiver, a piece of information relating to a change of a driver profile in the motor vehicle, a piece of information relating to a change in colour of an interior light of the motor vehicle, a piece of colour information relating to an external environment of the motor vehicle, a piece of volume information relating to a sound reproduction in the motor vehicle, a piece of voice output information in the motor vehicle, or a piece of movement information of the motor vehicle.

9. Image processing apparatus (10) according to one of the preceding claims, wherein the calculation device (12) is configured to adapt the image information by way of a change in a colour, a shape, a brightness, a sharpness, a size or a position of at least one image element.

10. Image processing apparatus (10) according to Claim 1, wherein the calculation device (12) is configured to increase a brightness of a first background image element with respect to a brightness of a second background image element, with the first background element being closer to the position than the second background element.

11. Image processing apparatus (10) according to Claim 1, wherein the calculation device (12) is configured to represent an animation of at least one background image element in the direction of the position.

12. Method for determining a piece of image information suitable for representation in a motor vehicle, comprising
calculating (22) a piece of image information, wherein the image information comprises representation information for a foreground and representation information for a background of an image that is to be represented;
capturing (24) one or more pieces of state information of an environment of a user of the motor vehicle; adapting (26) the image information to a change in the one or more pieces of state information, wherein the representation information for the background of the image that is to be represented is adapted to the one or more pieces of state information, wherein the representation information for the background comprises information relating to a plurality of background image elements which correspond to image points or other two-dimensional image units;
representing the image information;
receiving operating information from a user, wherein the one or more pieces of state information correspond to at least one piece of operating information that indicates an approach of a user toward the representation device (16) or a touching of the representation device (12) by a user and a position at which the user has approached or touched the representation device (12); and
increasing a density of the plurality of background image elements at that position.

13. Computer program for performing the method according to Claim 12 if the computer program is executed on a programmable hardware component.

## Revendications

1. Dispositif de traitement d'image (10) destiné à déterminer une information d'image appropriée pour être affichée dans un véhicule automobile, comportant un moyen de calcul (12) conçu pour calculer l'information d'image, et un moyen de détection (14) destiné à détecter une ou plusieurs informations d'état d'un environnement d'un utilisateur du véhicule automobile, dans lequel le moyen de calcul (12) est conçu pour adapter l'information d'image à une modification de l'information ou une information d'état, dans lequel l'information d'image comprend une information de représentation d'un premier plan et des informations de représentation d'un arrière-plan d'une image à afficher, dans lequel le moyen de calcul (12) est conçu pour adapter l'information de représentation de l'arrière-plan de l'image à représenter à l'information ou aux informations d'état, dans lequel l'information de représentation de l'arrière-plan comprend une information concernant une pluralité d'éléments d'image d'arrière-plan correspondant à des pixels ou à d'autres unités d'image planes, et dans lequel le dispositif de traitement d'image (10) comprend en outre un moyen de représentation (16) conçu pour représenter l'information d'image et conçu en outre pour recevoir des informations de fonctionnement d'un utilisateur, dans lequel l'information ou les informations d'état correspondent à au moins une information de fonctionnement indiquant le fait qu'un utilisateur se rapproche du moyen de représentation (16) ou qu'un utilisateur a touché le moyen de représentation (12) et une position à laquelle l'utilisateur s'est approché ou a touché le moyen de représentation (12), et dans lequel le moyen de calcul (12) est conçu pour augmenter une densité de la pluralité des éléments d'image d'arrière-plan à ladite position.

2. Dispositif de traitement d'image (10) selon la revendication 1, dans lequel le dispositif de détection (14) est conçu pour acquérir en tant qu'une ou plusieurs informations d'état au moins une information de couleur de l'environnement d'un utilisateur du véhicule automobile et le moyen de calcul (12) est conçu pour adapter une information de couleur contenue dans l'information d'image à l'information de couleur de l'environnement.

3. Dispositif de traitement d'image (10) selon la revendication 2, dans lequel le moyen de détection (14) comprend un capteur conçu pour détecter au moins une information de couleur d'environnement d'un environnement du véhicule automobile en tant qu'une ou plusieurs informations d'état, dans lequel le moyen de calcul (12) est conçu pour adapter une information de couleur contenue dans l'information d'image à l'information de couleur de l'environnement du véhicule automobile.

4. Dispositif de traitement d'image (10) selon la revendication 2 ou 3, dans lequel le moyen de détection (14) est conçu pour détecter une information de couleur d'un environnement d'espace intérieur de l'utilisateur dans le véhicule automobile en tant qu'une ou plusieurs informations d'état, dans lequel le moyen de calcul (12) est conçu pour adapter une information de couleur contenue dans l'information d'image à l'information de couleur de l'environnement d'espace intérieur.

5. Dispositif de traitement d'image (10) selon l'une quelconque des revendications précédentes, dans lequel l'information d'image comprend une information de représentation d'un premier plan et des informations de représentation d'un arrière-plan d'une image à représenter, dans lequel le moyen de calcul (12) est conçu pour adapter l'information de représentation de l'arrière-plan de l'image à représenter à l'information ou aux informations d'état.

6. Dispositif de traitement d'image (10) selon la revendication 5, dans lequel l'information de fonctionnement comprend une information concernant une zone du moyen de représentation (16) que l'utilisateur a touchée, ou une information concernant une position de l'utilisateur dans le véhicule automobile.

7. Dispositif de traitement d'image (10) selon l'une quelconque des revendications précédentes, dans lequel l'information ou les informations d'état comprennent au moins une information concernant un événement dans un système du véhicule automobile.

8. Dispositif de traitement d'image (10) selon la revendication 7, dans lequel ladite au moins une information concernant l'événement dans le système du véhicule automobile comprend une information concernant un changement d'émetteur d'un récepteur radio, une information concernant un changement de profil du conducteur dans le véhicule automobile, une information concernant un changement de couleur d'une lumière de l'espace intérieur du véhicule automobile, une information de couleur concernant un environnement extérieur du véhicule automobile, une information de volume concernant une diffusion sonore dans le véhicule automobile, une information de sortie vocale dans le véhicule automobile ou une information de déplacement du véhicule automobile.

9. Dispositif de traitement d'image (10) selon l'une quelconque des revendications précédentes, dans lequel le moyen de calcul (12) est conçu pour adapter l'information d'image en modifiant une couleur, une forme, une luminosité, une netteté, une taille ou une position d'au moins un élément d'image.

10. Dispositif de traitement d'image (10) selon la revendication 1, dans lequel le moyen de calcul (12) est conçu pour augmenter une luminosité d'un premier élément d'image d'arrière-plan par rapport à une luminosité d'un second élément d'image d'arrière-plan, dans lequel le premier élément d'arrière-plan est plus proche de ladite position que le second élément d'arrière-plan.

11. Dispositif de traitement d'image (10) selon la revendication 1, dans lequel le moyen de calcul (12) est conçu pour représenter une animation d'au moins un élément d'image d'arrière-plan dans la direction de ladite position.

12. Procédé de détermination d'une information d'image appropriée pour une représentation dans un véhicule automobile, consistant à
calculer (22) une information d'image, dans lequel l'information d'image comprend une information de représentation d'un premier plan et une information de représentation d'un arrière-plan d'une image à afficher ;
détecter (24) une ou plusieurs informations d'état d'un environnement d'un utilisateur du véhicule ;
adapter (26) l'information d'image à une modification de l'information ou des informations d'état, dans lequel l'information de représentation de l'arrière-plan de l'image à afficher est adaptée à l'information ou aux informations d'état, dans lequel l'information de représentation de l'arrière-plan comprend une information concernant une pluralité d'éléments d'image d'arrière-plan correspondant à des pixels ou à d'autres unités d'image planes ;
représenter l'information d'image ;
recevoir une information de fonctionnement d'un utilisateur, dans lequel l'information ou les informations d'état correspondent à au moins une information de fonctionnement qui indique qu'un utilisateur se rapproche du moyen de représentation (16) ou qu'un utilisateur touche le moyen de représentation (12) et une position à laquelle de laquelle l'utilisateur s'est approché ou à laquelle il a touché le moyen de représentation (12) ; et
augmenter la densité de la pluralité des éléments d'arrière-plan à ladite position.

13. Programme d'ordinateur destiné à mettre en oeuvre le procédé selon la revendication 12 lorsque le programme d'ordinateur est exécuté sur un composant matériel programmable.
